# EUROPÄISCHE PATENTSCHRIFT

(11) **EP 1 018 319 B1**
(45) Veröffentlichungstag und Bekanntmachung des Hinweises auf die Patenterteilung: **20.07.2005**
(21) Anmeldenummer: 00810009.1
(22) Anmeldetag: 06.01.2000
(51) Int. Cl.: A61C 8/00

(54) **Kieferimplantat**
Jaw implant
Implant dentaire

(30) Priorität: 08.01.1999 CH 2999
(43) Veröffentlichungstag der Anmeldung: 12.07.2000
(73) Patentinhaber: Prezmecky, Lászlo, Dr., 4414 Füllinsdorf (CH)
(72) Erfinder: Prezmecky, Lászlo, Dr., 4414 Füllinsdorf (CH)
(74) Vertreter: AMMANN PATENTANWAELTE AG BERN

(56) Entgegenhaltungen:
- DE-A- 3 421 056
- DE-U- 29 708 732
- US-A- 2 745 180
- US-A- 2 857 670
- US-A- 4 304 553
- US-A- 5 013 242
- US-A- 5 078 607

## Beschreibung

Die vorliegende Erfindung bezieht sich auf ein Kieferimplantat gemäss Oberbegriff von Patentanspruch 1. Ein solches Kieferimplantat ist in der US-A-5013242 des gleichen Anmelders beschrieben. Die dort offenbarten Enden der Retentionsstifte sind an den Kanten abgeschrägt und somit scharfkantig.

In der DE-A-34 21 056 ist ein Kieferimplantat beschrieben, der einen längsverlaufenden Schaft aufweist, der mit einem Gewindegang versehen ist, dessen Enden abgerundet sind.

Es hat sich herausgestellt, dass es wünschenswert ist, das im Oberbegriff definierte Kieferimplantat derart zu ändern, dass sowohl das Einsetzen des Implantates als auch insbesondere das Anwachsen des Kieferknochens sowie das Zusammensetzen des Implantates verbessert wird, womit die Aufgabe der vorliegenden Erfindung gegeben ist. Diese Aufgabe wird mit einem in Anspruch 1 beschriebenen Kieferimplantat gelöst.

Die Erfindung wird im Folgenden anhand einer Zeichnung von Ausführungsbeispielen näher erläutert.
- Fig. 1: zeigt im Längsschnitt ein Ausführungsbeispiel des erfindungsgemässen Kieferimplantates,
- Fig. 2: zeigt das Implantat gemäss Fig. 1 im eingesetzten Zustand, und
- Figuren 3 und 4: zeigen einen Retentionsstift im zusammengesetzten und getrennten Zustand.

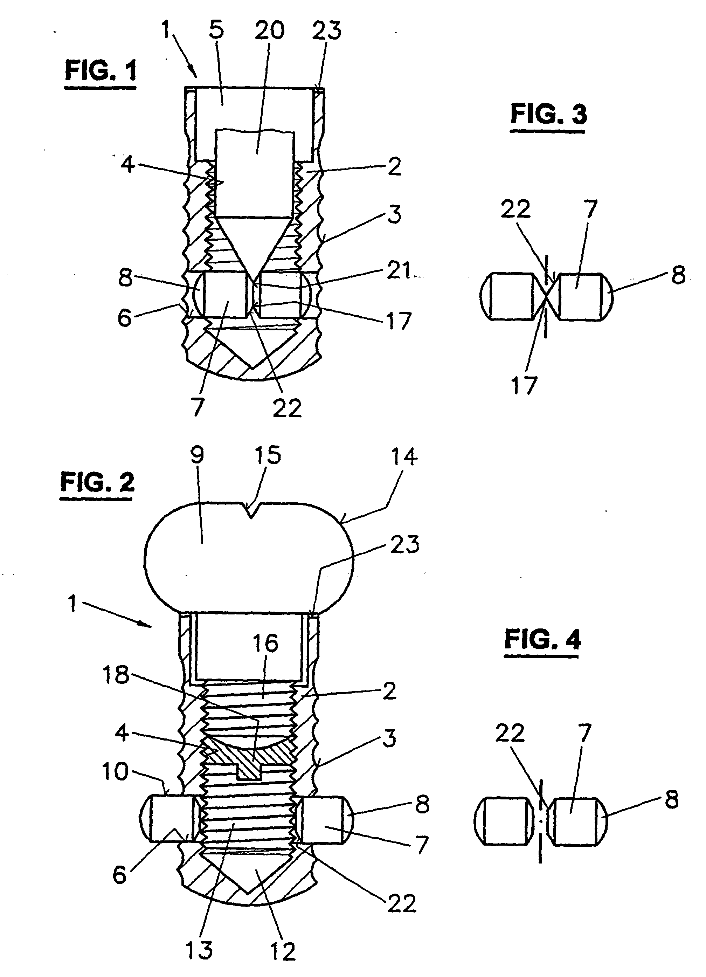

In Fig. 1 erkennt man das Kieferimplantat 1, mit einem als Hülse ausgebildeten, zylindrischen Gewindestift 2, der aussen ein Gewinde oder Rippen 3 zum Eindrehen in den Kieferknochen aufweist. Im Innern weist die Hülse ein Gewinde 4 und am oberen Ende eine Öffnung 5 zum Ansetzen eines Steckwerkzeuges auf. Die Einstecköffnung kann mehreckig ausgebildet sein. Im unteren Teil des Gewindestiftes ist senkrecht zur Längsachse eine Querbohrung 6 angeordnet, in der zwei miteinander verbundene Retentionsstifte, siehe Fig. 3, angeordnet sind. Dadurch, dass die beiden Retentionsstifte ursprünglich miteinander verbunden sind, können diese einfacher in die Querbohrung eingelegt werden, wodurch das Einsetzen und Handhaben des Implantates erleichtert werden.

Die äusseren Enden 8 der Retentionsstifte sind, im Gegensatz zum vorbekannten Kieferimplantat, abgerundet. Versuche mit dem vorbekannten Kieferimplantat haben ergeben, dass an den Kanten der abgeschrägten Retentionsstifte der Kieferknochen nicht wie erwartet gut anwächst. Dieser Nachteil wird mit den abgerundeten Enden der Retentionsstifte behoben.

Aus Fig. 3 geht hervor, dass die Verbindungsstelle 17 zwischen den beiden Retentionsstiften 7 eingekerbt ist, damit diese durch ein Werkzeug 20 mit Schneide 21 leicht getrennt werden können, siehe Fig. 1. Nach der Trennung sind die Innenseiten 22 der Retentionsstifte 7 verjüngt, so dass die Spitze 12 einer Verriegelungsschraube 13 daran angreifen kann, um die Retentionsstifte in die in Fig. 2 gezeigte Stellung herauszuschieben.

Wichtig für eine gute Verankerung ist, dass der Abstand zwischen der Oberfläche des Retentionsstiftes und der Oberkante des Gewindestiftes gross genug ist, dass diese Oberseite unterhalb der harten Corticalis zu liegen kommt und die Retentionsstifte in die relativ weichere Spongiosa hinausgetrieben werden. Beispielsweise kann bei einer Gesamtlänge des Implantates von 10 mm die Oberseite des Retentionsstiftes etwa 6 mm unterhalb der Oberkante des Gewindestiftes angeordnet sein. Dabei kann der Durchmesser des Implantates bei 6 mm liegen.

Der Implantatträger 9 ist mit einer kugelförmigen Oberfläche 14 mit einem Schlitz 15 zum Eindrehen desselben ausgebildet. Der Implantatträger weist ferner einen Gewindeschaft 16 auf, der in die Bohrung 4 des Gewindeschaftes passt.

Um das Implantat einzubringen, wird zunächst mit einem Knochenfräser, dessen Durchmesser geringer ist als der Durchmesser des Implantates, beispielsweise bei einem Implantatsdurchmesser von 6 mm mit einem Durchmesser von 5 mm, ein Kernloch gebohrt, dessen Tiefe um etwa 1 mm grösser ist als die Länge des Implantates. Daraufhin wird das Implantat mit Hilfe eines der Öffnung 5 angepassten Steckschlüssels eingedreht. Anschliessend werden die beiden bereits eingelegten Retentionsstifte 7 an ihrer Trennstelle 17 durch das Instrument 20 getrennt, indem beispielsweise ein leichter Schlag darauf gegeben wird. Dann wird die Verriegelungsschraube 13 hineingedreht, um die Retentionsstifte 7 um etwa je 1,5 mm hinauszutreiben.

Nach der Verankerung des Implantates wird auf diesem eine Heilungskappe, die einen in das Gewinde 4 passenden Gewindeschaft aufweist, aufgeschraubt. Nach dem Heilen kann dann der Implantatträger auf das Implantat angebracht und befestigt werden. Um das Eindringen von Krankheitserregern in die Bohrung zu verhindern, wird zwischen dem Kopf der Verriegelungsschraube 13 und dem Gewindeschaft 16 ein bakteriendichter Verschluss 18, beispielsweise aus einem gummielastischen Material, angebracht.

Als Materialien kommen für das Implantat die üblichen, in der Dentaltechnik verwendeten Materialien in Frage, beispielsweise Metall- oder Edelmetall-Legierungen sowie Titan oder Keramik. Ausserdem kann das Implantat mit biokompatiblem Material beschichtet sein. Zudem können auch mehr als zwei Retentionsstifte verwendet werden.

Um das Implantat bezüglich der Retentionsstifte orientieren zu können, sind oben zwei Markierungssicken 23 angebracht, die in Richtung dieser Stifte zeigen.

Die übrigen Vorteile dieses Implantates sind bereits aus der vorgenannten Schrift des gleichen Anmelders bekannt.

## Patentansprüche

1. Kieferimplantat, mit einem hülsenförmigen Stift (2) mit Innengewinde und mit zwei senkrecht zur Stiftachse angeordneten, mittels einer im Gewindestift (2) betätigbaren Verriegelungsschraube (13) radial herausschiebbaren Retentionsstiften (7), die subcortical in der Spongiosa des Zahnkieferknochens befestigbar sind, wobei der Gewindestift (2) zylindrisch ausgebildet und mit einem Aussengewinde zum Eindrehen in den Kieferknochen versehen ist und die Innenkanten (22) der Retentionsstifte abgeschrägt sind, um das Eindringen der Spitze (12) der Verriegelungsschraube (13) zu erleichtern, **dadurch gekennzeichnet, dass** die Aussenseiten (8) der Retentionsstifte (7) abgerundet und die Innenkanten (22) der beiden Retentionsstifte vor dem Erstgebrauch über eine eingekerbte Verbindungsstelle (17) trennbar miteinander verbunden sind.

2. Kieferimplantat nach Anspruch 1, **dadurch gekennzeichnet, dass** es eine vier- oder sechseckige Einstecköffnung (5) zur Aufnahme eines Eindrehwerkzeuges aufweist.

3. Kieferimplantat nach Anspruch 1 oder 2, mit einem Implantatträger (9), **dadurch gekennzeichnet, dass** zwischen der Verriegelungsschraube (13) und dem in die Bohrung (4) des Gewindestiftes (2) des Implantates (1) passenden Gewindeschaft (16) des Implantatträgers (9) ein bakteriendichter Verschluss (18) aus einem gummielastischen Material angeordnet ist.

## Claims

1. Jaw implant comprising an internally threaded, sleeve-shaped post (2) and two retention pins (7) that are disposed perpendicularly to the post axis and capable of being radially driven outwards by means of a locking screw (13) which is actuatable in the threaded post (2) and secured subcortically in the spongiosa of the jaw bone, the threaded post (2) being cylindrical in shape and provided with an external thread for screwing it into the jaw bone and the inner edges (22) of the retention pins being bevelled in order to facilitate the penetration of the point (12) of the locking screw (13), **characterised in that** the external sides (8) of the retention pins (7) are rounded and the inner edges (22) of the two retention pins are detachably connected to each other prior to the first use by a notched junction (17).

2. Jaw implant according to claim 1, **characterised in that** it comprises a square or hexagonal socket opening (5) for receiving a fastening tool.

3. Jaw implant according to claim 1 or 2, comprising an implant support (9), **characterised in that** a bacteria-tight closure (18) of a rubber-elastic material is disposed between the locking screw (13) and the threaded shank (16) of the implant support (9), which is adapted to the bore (4) of the threaded post (2) of the implant (1).

## Revendications

1. Implant maxillaire, comprenant un tenon (2) taraudé en forme de douille et deux tenons de rétention (7) agencés perpendiculairement à l'axe du tenon et capables d'être chassés vers l'extérieur radialement au moyen d'une vis de blocage (13) actionnable dans le tenon taraudé (2) et d'être fixés dans la spongieuse sous la corticale de l'os maxillaire, le tenon taraudé (2) étant de forme cylindrique et pourvu d'un filet extérieur pour le visser dans l'os maxillaire, et les arêtes intérieures (22) des tenons de rétention étant chanfreinés afin de faciliter la pénétration de la pointe (12) de la vis de blocage (13), **caractérisé en ce que** les côtés extérieurs (8) des tenons de rétention (7) sont arrondis, et que les arêtes intérieures (22) des deux tenons de rétention sont reliées entre elles avant la première utilisation par une jonction (17) entaillée.

2. Implant maxillaire selon la revendication 1, **caractérisé en ce qu'**il présente un creux (5) carré ou hexagonal pour l'introduction d'un outil de pose.

3. Implant maxillaire selon la revendication 1 ou 2, comprenant un porte-implant (9), **caractérisé en ce qu'**une fermeture (18) étanche aux bactéries en une matière caoutchouteuse élastique est interposée entre la vis de blocage (13) et la tige filetée (16) du porte-implant (9), qui est adaptée à l'alésage (4) du tenon taraudé (2) de l'implant (1).
